# EUROPEAN PATENT APPLICATION

(11) **EP 2 977 765 A1**
(43) Date of publication of application: **27.01.2016**
(21) Application number: 14178221.9
(22) Date of filing: 23.07.2014
(51) Int. Cl.: G01N 35/04

(54) **Sample container carrier, laboratory sample distribution system and laboratory automation system**

(71) Applicant: Roche Diagnostics GmbH, 68305 Mannheim (DE); F. Hoffmann-La Roche AG, 4070 Basel (CH)
(72) Inventor: Malinowski, Michal, 71522 Backnang (DE); Volz, Henny, 74321 Bietigheim-Bissingen (DE)
(74) Representative: Patentanwälte Ruff, Wilhelm, Beier, Dauster & Partner mbB

(57) **Abstract**

Sample container carrier (10) for a laboratory sample distribution system having a cover (40) above a magnet (30) in order to suitably align magnetic field lines. The application further relates to a laboratory sample distribution system having such a sample container carrier and to a laboratory automation system containing such a laboratory sample distribution system.

## Description

The invention relates to a sample container carrier for a laboratory sample distribution system, to a laboratory sample distribution system comprising such a sample container carrier, and to a laboratory automation system comprising such a laboratory sample distribution system.

Laboratory sample distribution systems comprising sample container carriers are typically used for laboratory automation systems. Such laboratory automation systems may comprise laboratory stations like pre-analytical, analytical and/or post-analytical stations.

An example for such a laboratory sample distribution system is disclosed in WO 2011/138448 A1. The laboratory sample distribution system comprises a transport plane and a plurality of electro-magnetic actuators positioned below the transport plane. It further comprises a number of sample container carriers, being adapted to carry sample containers. Such sample containers can, for example, be tubes made of transparent material.

### Problem and solution

It is an object of the invention to provide for a sample container carrier, a laboratory sample distribution system and a laboratory automation system being energy efficient and reliable.

The object is solved by a sample container carrier according to claim 1, a laboratory sample distribution system according to claim 12 and a laboratory automation system according to claim 14.

The invention relates to a sample container carrier for a laboratory sample distribution system.

The sample container carrier is adapted to carry one or more sample containers, e.g. in form of conventional sample tubes.

The sample container carrier is further adapted to be moved over a transport plane of the laboratory sample distribution system.

The sample container carrier comprises a magnetically active device being adapted to interact with a magnetic field generated by means of the laboratory sample distribution system such that a magnetic move force is applied to the sample container. It is to be understood that the sample container carrier can comprise a plurality of magnetically active devices, e.g. in order to introduce a preferred orientation in the sample container carrier. The magnetically active device can be a permanent magnet, an electromagnet, and/or be made of or comprise ferromagnetic material.

The sample container carrier further comprises a cover covering the magnetically active device.

The cover may be made of or comprise a material having a relative permeability µr larger than 1, preferably larger than 10, preferably larger than 100, preferably larger than 1000, preferably larger than 10000.

The cover may be made of or comprise ferromagnetic or ferrimagnetic material.

The cover may be made of or comprise a magnetically soft material, preferably construction steel. This material has been proven to show suitable properties for the intended use and is cheap and easily available.

The cover can, for example, have a dome shape, which has been proven suitable for the intended use.

The cover aligns and concentrates magnetic field lines originating from the magnetically active device such that a magnetic field line density is increased in a desired direction towards the transport plane, where the magnetic field of the magnetically active device is intended to interact with the magnetic field generated by means of the laboratory sample distribution system. This allows for a reduced electric power consumption when driving the sample container carriers over the transport plane.

According to an embodiment, the magnetically active device and/or the cover are vertically aligned with a bottom of the sample container carrier.

According to an embodiment, the sample container carrier comprises a sliding member, wherein the sliding member is adapted to be in contact with the transport plane if the sample container carrier is placed on the transport plane. The cover and the sliding member define a, e.g. closed, cavity. The magnetically active device is arranged inside the cavity. The sample container carrier slides on the transport plane on its sliding member. The sliding member may be adapted such that friction between the transport plane and the sliding member is reduced.

According to an embodiment, the cover has an opening or is open in the direction of the sliding member. This allows for a preferable outlet of magnetic field lines towards the transport plane, especially when the magnetically active device is placed under the cover and above the sliding member.

The magnetically active device and/or the cover may have a circular cross-section in a horizontal direction. The term "horizontal" refers to a typical orientation of the sample container carrier in use. Thus, a preferred orientation of the sample container carrier may be omitted.

According to an embodiment, the cover comprises a plate positioned above the magnet, wherein the plate preferably extends laterally beyond the magnetically active device. This allows for a shielding of magnetic field lines above the magnet.

According to an embodiment, the cover at least partially laterally surrounds the magnetically active device. This allows for a shield or field guiding all around the magnetically active device. Alternatively, the cover may comprise a number of sectors laterally surrounding the magnetically active device, the sectors being distant from each other. Such an embodiment allows for a preferred orientation or a plurality of preferred orientations. For example, the cover may comprise between two and ten sectors.

According to an embodiment, laterally surrounding portions of the cover are distant from the magnetically active device. This allows for a dedicated bending of magnetic field lines leaving the magnetically active device at its upper side.

According to an embodiment, laterally surrounding portions of the cover and/or portions of the cover positioned above the magnet have a thickness adapted to prevent magnetic saturation at typical magnetic fields induced by the magnetically active element. Such typical magnetic fields can, for example, have a value of about 0.7 T. Saturation would lead to a decreased capacity of the cover to bend the magnetic field lines as intended.

According to an embodiment, portions of the cover being positioned above the magnet at least partially abut the magnetically active device. This leads to an increased coupling of magnetic field lines from the magnetically active device to the cover. For example, the cover could abut the magnetically active device with the plate discussed above.

According to an embodiment, the cover has the form of a cap imposed on the magnetically active device.

According to another implementation, the cover and the magnetically active device together have the form of a mushroom, wherein the magnetically active element forms the post of the mushroom and the cover forms the cap of the mushroom. Such implementations have been proven suitable for typical applications.

According to an embodiment, the sample container carrier comprises holding means for a sample container in order to carry a sample container. The holding means may comprise a cone element forming a cone as an intake for the sample container. The holding means may further comprise a number of spring arms positioned at the top of the sample container carrier, the spring arms being adapted to engage the sample container laterally. Such implementations have been proven suitable for holding and transporting typical sample containers with the sample container carrier.

According to an embodiment, the holding means is positioned above the cover. This allows for a laterally compact design of the sample container carrier.

The invention further relates to a laboratory sample distribution system, comprising a number (1 to 500) of sample container carriers according to the invention, a transport plane, being adapted to support the sample container carriers, a number (4 to 1024) of electro-magnetic actuators, being stationary arranged below the transport plane, the electro-magnetic actuators being adapted to generate a magnetic field to move a respective sample container carrier on top of the transport plane, and a control device, being configured to control the movement of a respective sample container carrier on top of the transport plane by driving the electro-magnetic actuators such that the respective sample container carrier move along corresponding transport paths.

The transport plane can also be denoted as a transport surface. Supporting the sample container carriers can also be denoted as carrying the sample container carriers. The electro-magnetic actuators of the laboratory sample distribution system may be used in order to generate magnetic fields that drive the sample container carriers over the transport plane. The sample container carriers can be moved in two dimensions, allowing for great flexibility when transporting sample container carriers, for example between laboratory stations.

According to an embodiment, a radius of the cover in a horizontal cross-section is identical to or slightly smaller than a minimal distance between a center of an electro-magnetic actuator and a circumference of a directly adjacent electro-magnetic actuator. Such a design has been proven suitable for an efficient transport of sample container carriers over the transport plane. Alternatively, it can be said that the radius is approximately a minimal distance between a center of an electro-magnetic actuator and a circumference of an adjacent electro-magnetic actuator.

The distance between actuators is in a typical implementation 20 mm or about 20 mm.

The just discussed implementations with the specific design of the cover relative to the electro-magnetic actuators allow for a flow of magnetic field lines that has been proven especially effective for driving the sample container carriers with the electro-magnetic actuators.

The invention further relates to a laboratory automation system, comprising a number of a pre-analytical, analytical and/or post-analytical (laboratory) stations, and a laboratory sample distribution system as described above adapted to transport the sample container carriers and/or sample containers between the laboratory stations. The laboratory stations may be arranged adjacent to the laboratory sample distribution system.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, and a sample quality determining station.

### Short description of the drawings

The invention will now be described in detail with respect to the drawings, wherein
- Figs. 1a, 1b: show a sample container carrier in respective exploded views,
- Fig. 2: shows the sample container carrier in a sectional view,
- Fig. 3: shows the sample container carrier in a perspective sectional view,
- Fig. 4: shows the sample container carrier in a perspective top view,
- Figs. 5a, 5b: show a permanent magnet with respective field lines without and with a cover, and
- Fig. 6: shows a laboratory automation system comprising a laboratory sample distribution system, the laboratory sample distribution system comprising the sample container carrier.

### Detailed description of the drawings

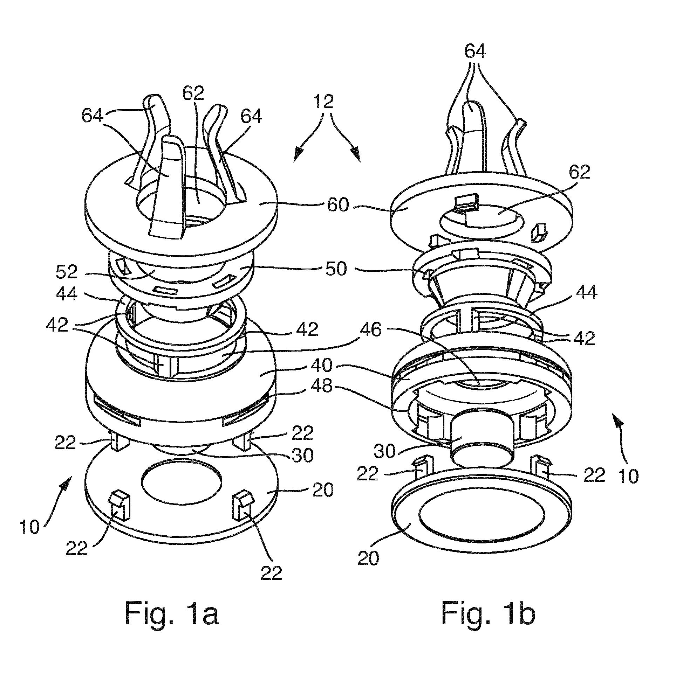

Figs. 1a and 1b show a sample container carrier 10 according to an embodiment of the invention. Fig. 1a shows the sample container carrier 10 in an exploded view from above, whereas fig. 1b shows the sample container carrier 10 in an exploded view from below.

A sliding member 20 is arranged at the bottom of the sample container carrier 10. The sliding member 20 is embodied as a disk that can slide over a transport plane of a laboratory sample distribution system. The sliding member 20 comprises four posts 22 extending to the upper side, wherein the posts 22 are intended for attaching further elements of the sample container carrier 10.

Above the sliding member 20, a magnetically active device in form of a permanent magnet 30 is arranged. The permanent magnet 30 is made of a hard ferromagnetic material and is permanently magnetized such that it generates a magnetic field similar to a coil having a vertical axis. Above the magnet 30, a cover 40 is arranged, which is made of a soft ferromagnetic material. The cover 40 comprises a top plate 46 positioned above the magnet and laterally extending over the magnet, and a laterally surrounding portion 48. The laterally surrounding portion 48 completely surrounds the magnet 30, thus omitting a preferred orientation of the sample container carrier 10. The cover 40 further comprises three posts 42 extending at the top side of the cover 40 and a ring 44 being arranged over the posts 42. The posts 42 and the ring 44 are adapted to mechanically couple holding means 12 over the cover 40.

The holding means 12 comprises a cone element 50 and a spring element 60. The cone element 50 is inserted into the ring 44 and comprises a cone 52 with an inner diameter decreasing from the upper side to the lower side. This cone 52 can laterally hold tube-shaped sample containers even with different diameters.

The spring element 60 is embodied as a disk having a bore 62 in the center of the disk. The bore is adapted such that a sample container can be put through. The spring element 60 further comprises three spring arms 64 positioned around the bore 62. The spring arms 64 are adapted to laterally engage and thus fix a tube-shaped sample container.

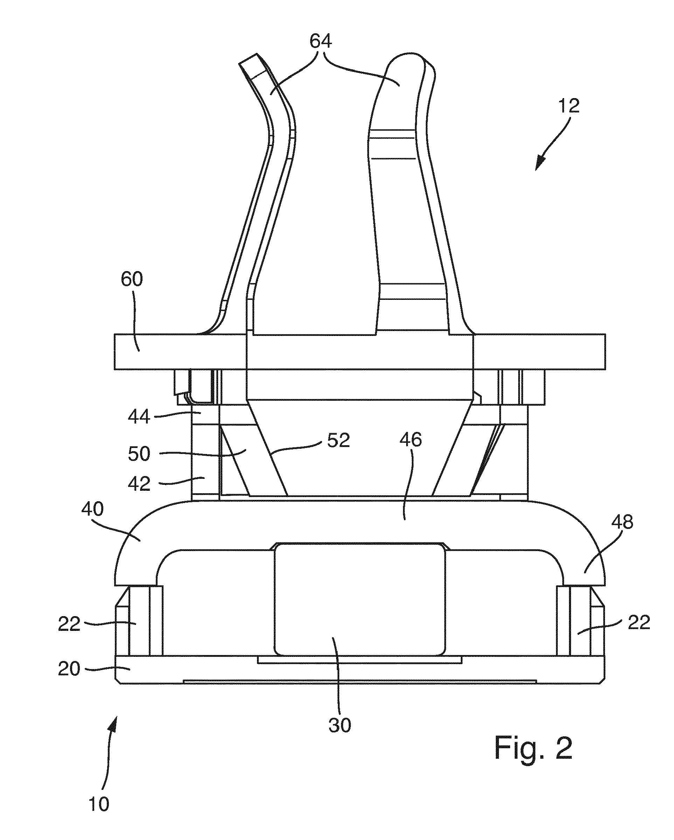

Fig. 2 shows a sectional view of the sample container carrier 10 in an assembled condition. As depicted, the permanent magnet 30 rests on the sliding member 20. The top plate 46 rests on the permanent magnet 30. Thus, these elements are in direct contact. The surrounding element 48 of the cover 40 laterally surrounds the permanent magnet 30 with a radial distance.

The cone element 50 and the spring element 60 of the holding means 12 are positioned just above the cover 40. The posts 22 fix the sliding element 20.

For further details, reference is made to the above description of figs. 1 a and 1 b.

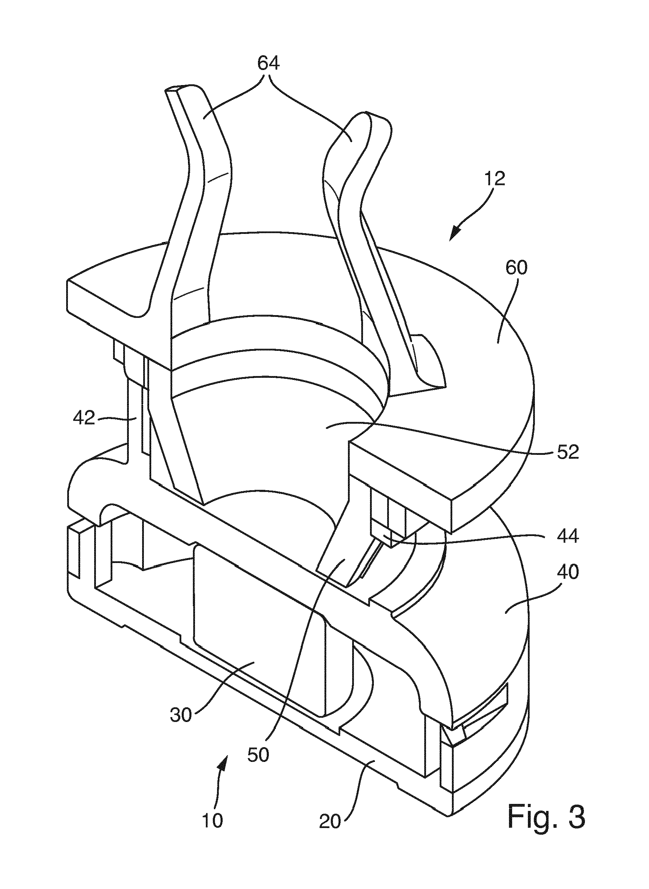

Fig. 3 shows the sample container carrier 10 in another sectional view, which is now perspective. With regard to the elements of the sample container carrier 10, reference is made to the above description of figs. 1a, 1b and 2.

As depicted, the cone 52 provides for a lateral support of a sample container contained in the holding means 12.

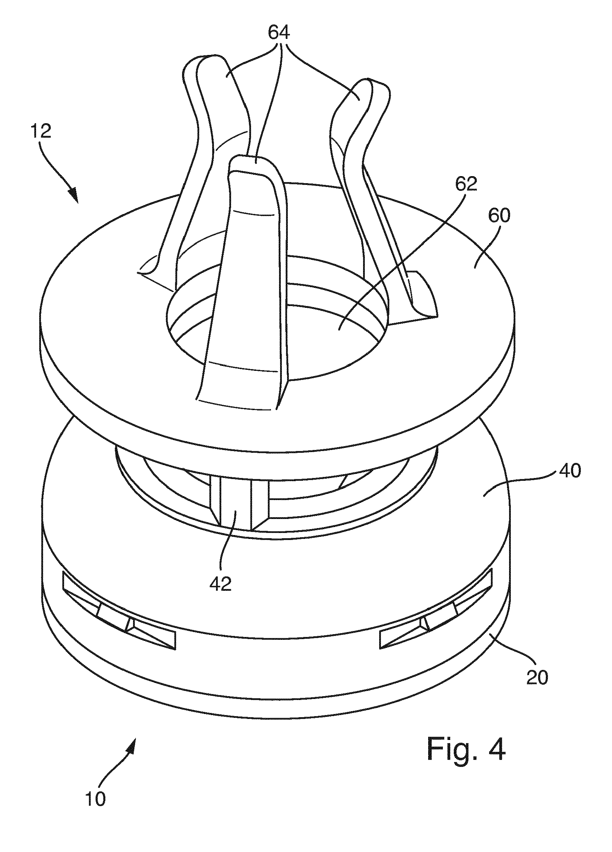

Fig. 4 shows the sample container carrier 10 in an assembled condition and in a perspective view. The sample container carrier 10 is adapted to move over a transport plane of a laboratory sample distribution system with its sliding member 20 and can be driven by a magnetic field generated by electro-magnetic actuators of the laboratory sample distribution system and interacting with the magnetic field of the permanent magnet 30. The sample container carrier 10 can contain or carry a sample container in the holding means 12.

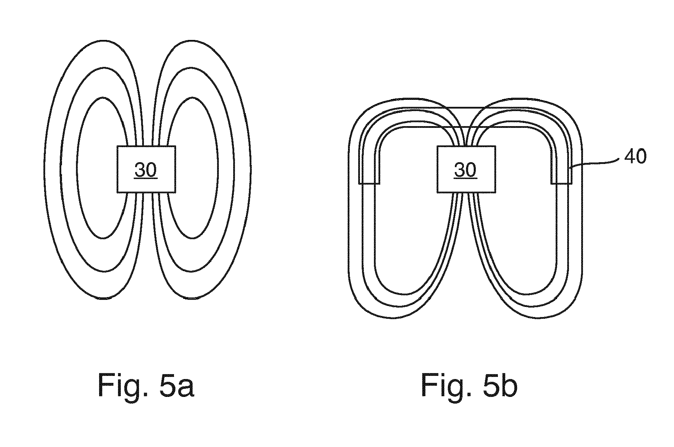

Figs. 5a and 5b schematically depict a comparison between magnetic field lines of the permanent magnet 30 with and without the cover 40.

Fig. 5a shows the permanent magnet 30 without the cover 40. As depicted, the magnetic field lines generated by the permanent magnet 30 symmetrically extend to the upper side and to the lower side.

Fig. 5b shows the permanent magnet 30 with the cover 40 imposed on it. As depicted, the permanent magnet 30 and the cover 40 together have the shape of a mushroom, wherein the magnet 30 forms the post.

The magnetic field lines generated by the permanent magnet 30 of fig. 5b are guided by means of the cover 40, such that the magnetic field lines are concentrated within the cover 40. As a result, a distorting upper and lateral magnetic stray field is reduced. This reduces an unwanted magnetic coupling between sample container carriers positioned or moving adjacent to each other on the transport plane. Further, the magnetic flux directed towards the transport plane and the electro-magnetic actuators positioned below the transport plane is increased, thus increasing the resulting magnetic drive force. Thus, energy consumption of the laboratory sample distribution system can be reduced.

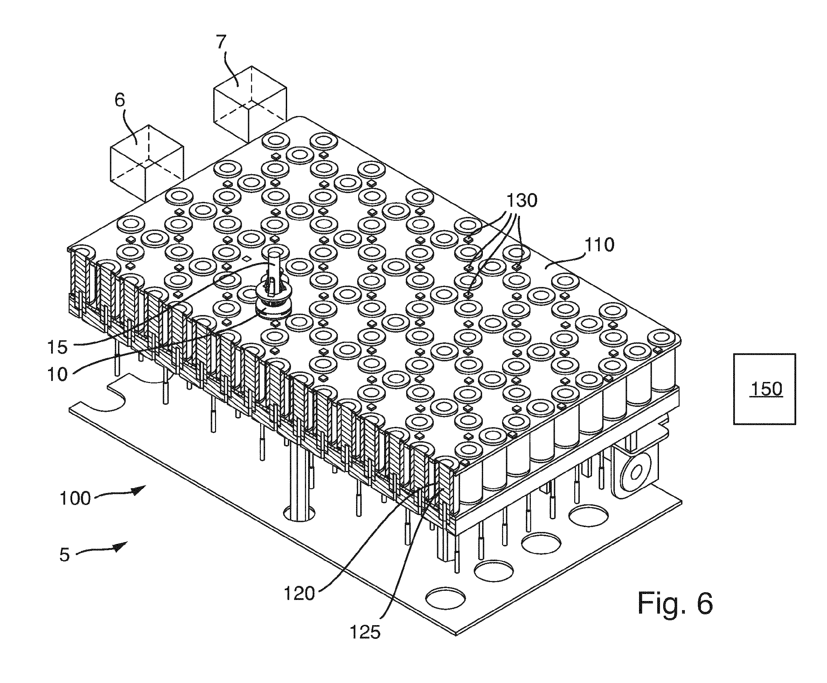

Fig. 6 shows a laboratory automation system 5 comprising a first laboratory station 6, a second laboratory station 7, and a laboratory sample distribution system 100. The laboratory stations 6, 7 are positioned adjacent to the laboratory sample distribution system 100 so that samples contained in sample containers 10 can be distributed between the laboratory stations 6 and 7 by means of the laboratory sample distribution system 100.

The laboratory sample distribution system 100 comprises a transport plane 110, on which sample container carriers 10 can move. In fig. 6, only one sample container carrier 10 is schematically depicted, wherein it should be noted that typical laboratory sample distribution systems 100 comprise a plurality of sample container carriers 10. The sample container carrier 10 contains a sample container 15 adapted to comprise a sample.

A plurality of electro-magnetic actuators 120 is arranged below the transport plane 110, each comprising a ferromagnetic core 125. The electro-magnetic actuators 120 are adapted to generate a magnetic field used to move the sample container carriers 10 on the transport plane 110. Further, a plurality of Hall sensors 130 is positioned on the transport plane 110, wherein the Hall sensors 130 are adapted to determine a respective position of a sample container carrier 10.

The lateral extension of the sample container carrier 10 is such that it extends over an electro-magnetic actuator 120 over which it is positioned to the edges of respective neighboring electromagnetic actuators. This has been proven to yield high efficiency when moving the sample container carrier 10 over the transport plane 110 by means of the electro-magnetic actuators 120.

The laboratory sample distribution system 100 further comprises a control unit 150, wherein the control unit 150 is adapted to drive the electro-magnetic actuators 120 such that the sample container carrier 10 moves according to a predetermined path.

The control unit 150 is further connected to the Hall sensors 130 in order to determine the position of each sample container carrier 10. The control unit 150 can direct sample container carriers 10 independent from one another to any laboratory station 6, 7.

Due to the sample container carrier 10 being configured according to the invention having a ferromagnetic cover 40 covering the permanent magnet 30, energy consumption of the laboratory sample distribution system 100 can be reduced and accuracy of positioning can be increased.

## Claims

1. Sample container carrier (10) for a laboratory sample distribution system (100),
- wherein the sample container carrier (10) is adapted to carry one or more sample containers (15),
- wherein the sample container carrier (10) is adapted to be moved over a transport plane (110) of the laboratory sample distribution system (100), and
- wherein the sample container carrier (10) comprises:
- a magnetically active device (30) being adapted to interact with a magnetic field generated by means of the laboratory sample distribution system (100) such that a magnetic move force is applied to the sample container carrier (10), and
- a ferromagnetic cover (40) covering the magnetically active device (30).

2. Sample container carrier (10) according to claim 1,
- wherein the sample container carrier (10) comprises a sliding member (20), wherein the sliding member (20) is adapted to be in contact with the transport plane (110) if the sample container carrier (10) is placed on the transport plane (110), wherein the cover (40) and the sliding member (20) define a cavity, wherein the magnetically active device (30) is arranged inside the cavity.

3. Sample container carrier (10) according to claim 2,
- wherein the cover (40) has an opening in the direction of the sliding member (20).

4. Sample container carrier (10) according to one of the preceding claims,
- wherein the magnetically active device (30) and/or the cover (40) have a circular horizontal cross section.

5. Sample container carrier (10) according to one of the preceding claims,
- wherein the cover (40) comprises a plate (46) positioned above the magnetically active device (30),
- wherein the plate (46) extends laterally beyond the magnetically active device (30).

6. Sample container carrier (10) according to one of the preceding claims,
- wherein the cover (40) at least partially laterally surrounds the magnetically active device (30), and/or
- wherein the cover (40) comprises a number of sectors laterally surrounding the magnetically active device (30), the sectors being distant from each other.

7. Sample container carrier (10) according to one of the preceding claims,
- wherein the cover (40) is cap shaped and imposed on the magnetically active device (30).

8. Sample container carrier (10) according to one of the preceding claims,
- wherein the sample container carrier (10) comprises holding means (12) for a sample container (15).

9. Sample container carrier (10) according to claim 8,
- wherein the holding means (12) comprise an intake element (50) forming a cone (52), the cone (52) being adapted to guide and partially intake an end portion of the sample container (15).

10. Sample container carrier (10) according to claim 8 or 9,
- wherein the holding means (12) comprise a number of spring arms (64) positioned at the top of the sample container carrier (10), the spring arms (64) being adapted to fix the sample container (15).

11. Sample container carrier (10) according to one of claims 8 to 10,
- wherein the holding means (12) is positioned above the cover (40).

12. Laboratory sample distribution system (100), comprising:
- a number of sample container carriers (10) according to one of the preceding claims,
- a transport plane (110), being adapted to support the sample container carriers (10),
- a number of electro-magnetic actuators (120), being stationary arranged below the transport plane (110), the electro-magnetic actuators (120) being adapted to generate magnetic fields to move the sample container carriers (10) on top of the transport plane (110), and
- a control device (150), being configured to control the movement of the sample container carriers (10) on top of the transport plane (110) by driving the electro-magnetic actuators (120) such that the sample container carriers (10) move along corresponding transport paths.

13. Laboratory sample distribution system according to claim 12,
- wherein a radius of the cover (40) in a horizontal cross section is identical to or smaller than a minimal distance between a center of an electro-magnetic actuator (120) and a circumference of an adjacent electro-magnetic actuator (120).

14. Laboratory automation system (5), comprising:
- a number of laboratory stations (6, 7), preferably in form of pre-analytical stations, analytical stations and/or a post-analytical stations, and
- a laboratory sample distribution system (100) according to claim 12 or 13 adapted to distribute sample container carriers (10) and/or sample containers (15) between the laboratory stations (6, 7).
